Europäisches Patentamt

European Patent Office

Office européen des brevets

(19)

(11) EP 0 719 382 B1

(12) FASCICULE DE BREVET EUROPEEN

(45) Date de publication et mention
de la délivrance du brevet:
**19.05.1999 Bulletin 1999/20**

(51) Int Cl.⁶: **F02D 31/00**, F02D 41/08,
F02D 41/14

(21) Numéro de dépôt: **94926865.0**

(22) Date de dépôt: **23.08.1994**

(86) Numéro de dépôt international:
**PCT/EP94/02785**

(87) Numéro de publication internationale:
**WO 95/06810 (09.03.1995 Gazette 1995/11)**

(54) **PROCEDE ET DISPOSITIF DE COMMANDE DU REGIME D'UN MOTEUR A COMBUSTION INTERNE EN PHASE DE RALENTI**

VERFAHREN UND VORRICHTUNG ZUR STEUERUNG DER LEERLAUF-DREHZAHL EINER INNENBRENNKRAFTMASCHINE

METHOD AND DEVICE FOR CONTROLLING THE SPEED OF AN INTERNAL COMBUSTION ENGINE WHEN IDLING

(84) Etats contractants désignés:
**DE ES GB IT**

(30) Priorité: **01.09.1993 FR 9310423**

(43) Date de publication de la demande:
**03.07.1996 Bulletin 1996/27**

(73) Titulaire: **SIEMENS AUTOMOTIVE S.A.**
**31036 Toulouse Cédex (FR)**

(72) Inventeurs:
• **AUBOURG, Alain, Michel, Jean**
**F-31240 Saint-Jean (FR)**
• **LE QUELLEC, Jean-Michel**
**F-31500 Toulouse (FR)**
• **RAYMOND, Christophe**
**F-31400 Toulouse (FR)**

(74) Mandataire: **Epping, Wilhelm, Dr.-Ing. et al**
**Patentanwalt**
**Postfach 22 13 17**
**80503 München (DE)**

(56) Documents cités:
**EP-A- 0 554 479**      **GB-A- 2 168 830**
**GB-A- 2 264 369**

• **PATENT ABSTRACTS OF JAPAN vol. 17, no. 374 (M-1445) 14 Juillet 1993 & JP,A,05 059 991 (SANYO ELECTRIC CO LTD) 9 Mars 1993**
• **PATENT ABSTRACTS OF JAPAN vol. 17, no. 166 (P-1514) 30 Mars 1993 & JP,A,04 328 602 (AISAN IND CO LTD) 17 Novembre 1992**
• **PATENT ABSTRACTS OF JAPAN vol. 12, no. 485 (M-777) 19 Décembre 1988 & JP,A,63 205 445 (JAPAN ELECTRONIC CONTROL) 24 Août 1988**

## Description

La présente invention est relative à un procédé et à un dispositif de commande du régime d'un moteur à combustion interne en phase de ralenti et, plus particulièrement, à un tel procédé et à un tel dispositif opérant par correction de la commande d'un actionneur influant sur ce régime en fonction de l'écart entre un régime de consigne et le régime actuel, selon le préambule de la revendication 1 (voir GB-A-2 264 369 et JP-A-63 205 445).

Les moteurs à combustion interne, en particulier ceux qui propulsent des véhicules automobiles, fonctionnent à des régimes variables dont la commande et/ou la régulation est souvent délicate, notamment en phase de ralenti. Une phase de ralenti commence normalement quand le conducteur lève le pied de l'accélérateur. La commande du régime pendant une telle phase a pour objet d'assurer le ralliement de ce régime à un régime de consigne, la régulation du régime autour de ce régime de consigne malgré d'éventuelles perturbations et le passage de diverses phases transitoires telles qu'une phase de ralenti "entraîné", le véhicule roulant alors avec un rapport de boîte de vitesses engagé, ou une phase de démarrage du moteur.

Dans toutes ces circonstances, la commande du régime est en effet délicate car on sait que la stabilité d'un moteur à bas régime est difficile à assurer et que les réactions du moteur sont difficiles à modéliser. En outre, les conditions d'entrée en phase de ralenti peuvent varier considérablement, en ce qui concerne par exemple l'action du conducteur sur la pédale d'accélérateur, la température de l'eau de refroidissement du moteur, la température de l'air, la présence éventuelle de perturbations aléatoires dues à l'enclenchement d'un consommateur d'énergie électrique (dispositif d'éclairage, ventilateur) ou mécanique (climatiseur, direction assistée). La commande du régime doit aussi prendre en compte d'autres contraintes tenant au confort du conducteur (niveau de bruit, vibrations, à-coups) et à des normes concernant la pollution de l'environnement par les gaz d'échappement du moteur.

Pour assurer la commande du régime du moteur en phase de ralenti, on utilise couramment aujourd'hui des dispositifs de commande en boucle fermée à régulateur du type PID "supervisé". On décrit un tel dispositif dans le document DE-A-4 215 959 par exemple, qui fait appel à la logique floue pour le réglage des termes P,I et D du régulateur. Il en résulte une mise au point longue et fastidieuse du régulateur pour l'adapter à chaque type de moteur. La régulation PID présente aussi l'inconvénient de ne prendre en compte que certains aspects du fonctionnement du moteur et de n'être pas entièrement satisfaisante du point de vue "robustesse", le vieillissement du moteur ou les tolérances de fabrication industrielle des moteurs pouvant affecter défavorablement le fonctionnement d'un régulateur PID "supervisé".

On connaît aussi du document No. 900594 publié par la "Society of Automotive Engineers" des Etats-Unis d'Amérique, un procédé de commande du régime de ralenti d'un moteur à combustion interne entièrement basé sur des résultats expérimentaux mis en oeuvre à l'aide de la logique floue et donc, a priori, susceptible de présenter plus de robustesse et de souplesse. Cependant, le procédé décrit exige l'utilisation de tables et d'opérateurs complexes occupant beaucoup de place en mémoire dans le calculateur utilisé pour mettre en oeuvre le procédé, celui-ci impliquant en outre des temps de calcul importants.

La présente invention a pour but de fournir un procédé de commande du régime d'un moteur à combustion interne en phase de ralenti qui procure, dans le calculateur utilisé à cet effet, des réductions sensibles de la place nécessaire en mémoire et des temps de calcul.

La présente invention a aussi pour but de fournir un tel procédé qui soit satisfaisant du quadruple point de vue : robustesse, tenue aux perturbations, facilité de réglage et agrément de conduite d'un véhicule propulsé par un tel moteur, dans toutes les phases de régime de ralenti.

La présente invention a encore pour but de réaliser un dispositif pour la mise en oeuvre de ce procédé.

On atteint ces buts de l'invention, ainsi que d'autres qui apparaîtront à la lecture de la description qui va suivre, avec un procédé de commande du régime N d'un moteur à combustion interne en phase de ralenti, par correction de la commande d'un actionneur influant sur ce régime en fonction de l'erreur $E = N_C - N$ entre un régime $N_C$ de consigne et le régime actuel N, et de la dérivée temporelle E' de cette erreur, ce procédé étant remarquable en ce qu'on tire une correction $\Delta u$ de la commande de l'actionneur d'une combinaison linéaire de première ($\Delta u_1$) et deuxième ($\Delta u_2$) corrections partielles fonctions, respectivement, de l'erreur E en régime et de la dérivée temporelle E' de cette erreur, lesdites corrections étant définies en fonction de la position relative de la valeur de l'erreur, respectivement de la dérivée de l'erreur, par rapport à au moins deux valeurs prédéterminées de l'erreur (respectivement dérivée de l'erreur) à chacune desquelles est associée une valeur prédéterminée de la correction partielle $\Delta u_1$ (respectivement $\Delta u_2$).

Comme on le verra dans la suite, la division de la correction en deux corrections partielles fonctions chacune de l'un des paramètres E,E' seulement, permet de réduire la quantité d'informations nécessaire à l'exécution du procédé, et donc leur encombrement en mémoire, ainsi que le temps de calcul de la correction.

Suivant un premier mode de mise en oeuvre du procédé selon l'invention, l'erreur E et la dérivée E' de cette erreur sont fuzzyfiées et traitées par des jeux séparés de règle de logique floue de manière à fournir, après défuzzyfication, les première ($\Delta u_1$) et deuxième

($\Delta u_2$) corrections partielles.

Suivant un deuxième mode de mise en oeuvre du procédé selon l'invention, les fonctions liant les première ($\Delta u_1$) et deuxième ($\Delta u_2$) corrections partielles à l'erreur E en régime et à la dérivée E' de cette erreur, respectivement, sont définies par des points caractéristiques, des valeurs intermédiaires des corrections étant obtenues par interpolation entre ces points caractéristiques.

Pour la mise en oeuvre du procédé selon l'invention, on utilise un dispositif comprenant a) des moyens pour délivrer un premier signal représentatif de l'erreur E en régime et un deuxième signal représentatif de la dérivée temporelle E' de cette erreur, à partir d'un signal délivré par un capteur du régime actuel N du moteur et d'un signal représentatif d'une valeur prédéterminée du régime $N_C$ de consigne de ralenti, b) des premier et deuxième contrôleurs alimentés par les premier et deuxième signaux, respectivement, pour délivrer les première et deuxième corrections partielles et c) des moyens alimentés par ces corrections partielles et par une source d'un signal de commande nominal de l'actionneur pour délivrer un signal de commande final de l'actionneur.

D'autres avantages de la présente invention apparaîtront à la lecture de la description qui va suivre et à l'examen du dessin annexé dans lequel :

- la figure 1 est un schéma fonctionnel du dispositif de commande suivant la présente invention,
- les figures 2 et 3 sont des schémas qui illustrent un premier mode de mise en oeuvre du procédé suivant l'invention, faisant appel à une commande en logique floue,
- les figures 4 et 5 sont des graphes qui illustrent un deuxième mode de mise en oeuvre du procédé suivant l'invention, faisant appel à des fonctions de commande définies par des points caractéristiques,
- la figure 6 est constituée par deux graphes illustrant le fonctionnement du procédé suivant l'invention dans une phase de compensation d'un raté de combustion, et
- la figure 7 est constituée par deux graphes illustrant le fonctionnement du procédé suivant l'invention dans une phase de compensation d'une perturbation telle que l'enclenchement, en phase de ralenti, d'un appareil électrique ou mécanique installé dans un véhicule propulsé par le moteur à combustion interne.

La présente invention est destinée à la commande, en phase de ralenti, d'un moteur à combustion interne propulsant un véhicule automobile, ce moteur étant placé dans un environnement classique de capteurs, d'actionneurs et de moyens électroniques de commande de ces actionneurs. Ces moyens comprennent couramment un calculateur électronique alimenté par un capteur à réluctance variable, par exemple, couplé à une roue dentée montée sur l'arbre de sortie du moteur pour délivrer au calculateur un signal représentatif de la vitesse de rotation (ou régime) du moteur, le calculateur étant aussi alimenté par un capteur de pression monté dans le collecteur d'admission du moteur pour fournir un signal représentatif de la pression de l'air admis dans le moteur. D'autres signaux en provenance de capteurs de température d'eau de refroidissement du moteur, de température d'air etc... ou d'une sonde à oxygène placée dans les gaz d'échappement du moteur, peuvent être aussi classiquement délivrés au calculateur.

Celui-ci est équipé des moyens matériels et logiciels nécessaires à l'élaboration et l'émission de signaux de commande d'actionneurs tels qu'un injecteur de carburant, un circuit d'allumage d'une bougie ou une vanne de commande d'air additionnel court-circuitant un papillon de commande de la quantité d'air entrant dans le moteur par le collecteur d'admission.

Dans la suite on a choisit, à titre illustratif, de décrire le procédé de commande suivant l'invention à l'aide de la commande du moteur par action sur le temps d'ouverture d'un injecteur de carburant. Il apparaîtra cependant immédiatement à l'homme de métier que le même procédé de commande pourrait être développé par une action sur l'ouverture d'une vanne de commande d'air additionnel, sur le phasage des ouvertures d'une pluralité d'injecteurs de carburant, sur l'angle d'ouverture du papillon des gaz à commande électrique, ou par une combinaison d'actions sur ces divers actionneurs.

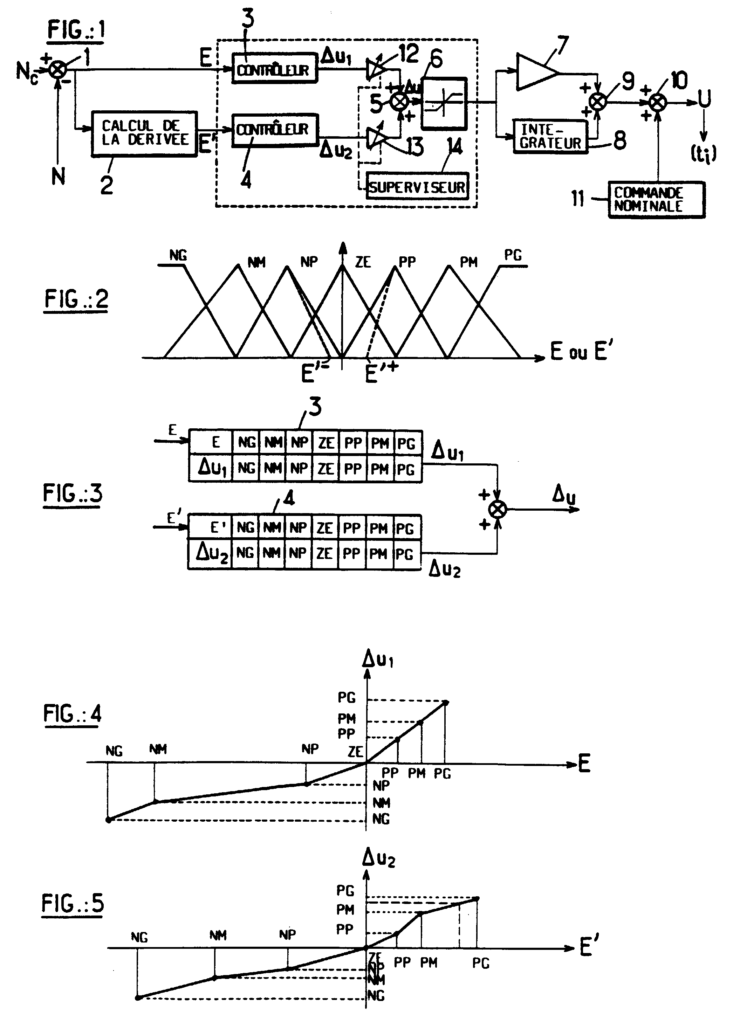

A la figure 1 du dessin annexé, il apparaît que le dispositif suivant l'invention comprend un moyen 1 alimenté par des signaux représentatifs du régime actuel N du moteur et du régime de consigne de ralenti $N_C$ ($N_C$ = 600 tr/mn par exemple) pour former un signal d'erreur $E = N_C$ - N. Il est à noter que le régime de consigne de ralenti pourrait n'être pas fixe et, au contraire, être fonction de divers paramètres tels que la température de l'eau de refroidissement du moteur ou de la présence éventuelle d'une perturbation telle que l'enclenchement d'un appareil consommateur d'énergie mécanique ou électrique.

Le dispositif de la figure 1 comprend aussi un moyen 2 pour former un signal représentatif de la dérivée temporelle E' de l'erreur E et des moyens de commande ou "contrôleurs" 3 et 4 alimentés respectivement par les signaux E et E', éventuellement filtrés par un filtre récursif du 1er ordre pour éviter des phénomènes de "bruit". Les contrôleurs 3 et 4 élaborent des signaux de corrections partielles $\Delta u_1$ et $\Delta u_2$ respectivement. Avantageusement, mais de manière optionnelle seulement, le dispositif peut comprendre en outre des amplificateurs 12,13 de gain $G_1, G_2$ respectivement, alimentés par les signaux $\Delta u_1, \Delta u_2$ respectivement. Les signaux $G_1.\Delta u_1$ et $G_2.\Delta u_2$ ainsi obtenus en sortie des amplificateurs sont additionnés en 5 pour constituer un signal global de correction $\Delta u$ d'un signal de commande nominal d'un actionneur (non représenté), un injecteur de carburant dans le moteur par exemple, comme on l'a vu plus haut.

Un superviseur 14 règle les gains $G_1, G_2$ des amplificateurs 12,13 de manière à faire varier le poids relatif des corrections $\Delta u_1$ et $\Delta u_2$ dans la combinaison linéaire $\Delta u$ en fonction, par exemple, du régime du moteur à l'entrée en phase de régime de ralenti et, éventuellement, de la charge alors supportée par le moteur.

Le signal $\Delta u$ peut être traité dans un saturateur 6 pour limiter la dynamique de la commande, comme il est classique. De même la sortie du saturateur peut être traitée en parallèle dans un amplificateur 7 de gain $G_3$ et dans un intégrateur 8 de manière à former une correction "directe" $G_3.\Delta u$ et une correction "intégrale" $G_4\int\Delta u.dT$ additionnées en 9 puis, en 10, à une commande nominale 11 de l'actionneur pour constituer finalement le signal de commande U de cet actionneur.

Comme cela est classique, la correction intégrale 8 est prévue pour corriger la commande nominale quand celle-ci ne convient plus du fait de l'application au moteur d'une charge permanente ou à variation lente, comme c'est le cas par exemple lors de la mise en action d'un dispositif d'assistance de direction.

Les traitements opérés dans les blocs 6, 7, et 8 du diagramme de la figure 1 étant optionnels, on entendra par "$\Delta u$" dans la suite le signal de correction de la commande nominale de l'actionneur, que celui-ci ait, ou non, subit lesdits traitements.

Comme cela apparaîtra immédiatement à l'homme de métier, le dispositif de commande décrit ci-dessus peut aisément être incorporé au calculateur mentionné plus haut, par simple installation dans celui-ci des moyens matériels et logiciels nécessaires.

On remarquera dès à présent, que dans le dispositif suivant l'invention, l'erreur E et sa dérivée E' sont prises en compte séparément dans deux contrôleurs 3 et 4 distincts. On va maintenant expliquer, en liaison avec les figures 2 et 3, pourquoi cette disposition est avantageuse en matière de réduction de l'encombrement des mémoires du calculateur et du temps de calcul.

Suivant un premier mode de réalisation du dispositif selon l'invention schématisé à la figure 3, les contrôleurs 3 et 4 sont conçus pour travailler en logique floue. Pour ce faire, les variables E et E' sont "fuzzyfiées" par les procédés classiques de définition de classes d'appartenance NG à PG, par exemple et de fonctions d'appartenance à ces classes qui peuvent prendre des formes triangulaires comme représentées à la figure 2, ou d'autres formes bien connues de l'homme de métier. Les classes d'appartenance NG à PG apparaissant sur cette figure correspondent aux représentations linguistiques suivantes :

PG = positif grand
PM = positif moyen
PP = positif petit
ZE = zéro
NP = négatif petit

NM = négatif moyen
NG = négatif grand

On remarquera sur la figure 2 que les fonctions d'appartenance NP et PP de la variable E', représentées en pointillés, ne se rejoignent pas au point E' = 0. Cette disposition particulière permet, dans l'intervalle E'- à E'+, de créer une hystérésis artificielle de la correction partielle fonction de la dérivée, pour éviter les perturbations liées au bruit de mesure de E' à proximité de sa valeur nulle. En effet, dans cet intervalle, seule la fonction d'appartenance ZE (zéro) est activée.

Chaque contrôleur est chargé avec 7 règles tirées de l'expérience de l'homme de métier, traduisant des observations telles que :

"Plus l'entrée (E ou E') est grande, plus la correction doit être grande",

ce qui donne des règles du type :

"Si l'entrée (E ou E') appartient à la classe NG, alors la correction appartient à la classe NG" ou

"Si l'entrée (E ou E') appartient à la classe PG, la correction appartient à la classe PG".

Les corrections floues ainsi déterminées sont ensuite défuzzyfiées classiquement pour fournir les corrections partielles $\Delta u_1$ et $\Delta u_2$ que l'on additionne pour former la correction globale $\Delta u$ de la commande nominale U.

Dans ce premier mode de réalisation en logique floue, l'étape de "fuzzification" de la valeur de l'erreur (respectivement dérivée de l'erreur) permet de déterminer une "position relative" de cette valeur par rapport aux valeurs correspondant aux maxima des fonctions d'appartenance représentatives des classes dont elle relève, position exprimée par les degrés d'appartenance à ces classes relevés sur les graphes de la figure 2. L'étape de "défuzzification" détermine, en fonction de ces degrés d'appartenance, la position relative de la commande par rapport aux valeurs de commandes associées aux classes de commande correspondant, par le jeu de règles, aux classes d'erreur (respectivement dérivée de l'erreur) considérées. En définissant ainsi chacune des corrections $\Delta u_1$, $\Delta u_2$ par rapport à deux valeurs prédéterminées, on évite avantageusement, suivant l'invention, les inconvénients des corrections PID classiques ou "supervisées", appliquées par "segments" de valeurs de E ou E', qui tiennent à l'indéfinition des raccordements de ces segments.

Un avantage important du procédé de commande suivant l'invention apparaît maintenant, par référence au procédé de commande décrit dans le document SAE No. 900594 précité qui fait lui aussi appel à la logique floue. Dans ce document, cependant, le contrôleur flou utilisé exécute un jeu de règles schématisé par une table à deux entrées E et E'. En fuzzyfiant ces entrées sur 7 classes d'appartenance, on aboutit alors à un tableau de 7 x 7 = 49 règles. Par comparaison, la présente invention fait usage de deux contrôleurs exécutant chacun 7 règles soit 14 règles au total. Il est clair que l'encombrement de la mémoire du calculateur par ces 14 règles est bien moindre que celui correspondant aux 49 règles du tableau conforme aux enseignements de la technique antérieure. Le temps de calcul de la correction de la commande est lui aussi réduit en proportion de la réduction du nombre des règles prises en compte dans le calcul.

Les graphes des figures 4 et 5 illustrent le principe de fonctionnement d'un deuxième mode de réalisation du dispositif suivant l'invention, qui tire lui aussi parti de la présence dans ce dispositif de deux contrôleurs spécialisés sensibles respectivement à l'erreur E et la dérivée E' de cette erreur. Plutôt que d'utiliser la logique floue comme décrit précédemment, on simplifie encore le traitement des données d'expérience connues de l'homme de métier en formalisant celles-ci en deux fonctions $\Delta u_1 = f(E)$ et $\Delta u_2 = f'(E')$ telles que représentées aux figures 4 et 5 respectivement. Avantageusement, chaque fonction est définie par des points particuliers, de représentations linguistiques NG à PG choisies par référence à celles utilisées ci-dessus en logique floue, l'analogie s'arrêtant d'ailleurs là. Entre ces points particuliers, les contrôleurs tirent les sorties $\Delta u_1$ et $\Delta u_2$ de simples. interpolations entre les points particuliers encadrant une valeur d'entrée E,E' particulière ce qui simplifie et allège encore les calculs par comparaison avec les calculs de logique floue évoqués en liaison avec le mode de réalisation des figures 2 et 3.

On remarquera incidemment que les valeurs associées à chacune des représentations linguistiques peuvent être différentes pour chacune des variables E, E' d'entrée. On remarquera en particulier la dissymétrie des pentes des graphes autour de 0 (ZE), pour la variable E'.

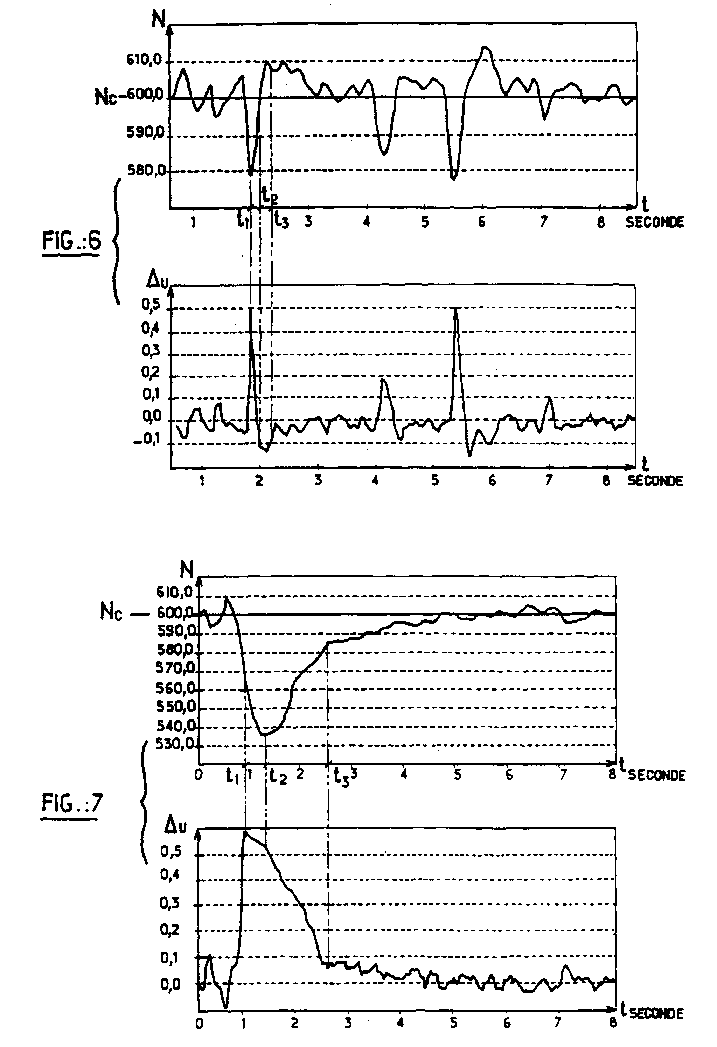

On va maintenant illustrer les avantages de la présente invention par la description de deux exemples typiques de fonctionnement du dispositif de commande, l'un concernant la réaction de ce dispositif à l'apparition d'un raté de combustion (voir les graphes de la figure 6), l'autre concernant la réaction de ce dispositif à l'apparition d'une perturbation telle que l'enclenchement d'un appareil électrique ou mécanique embarqué dans un véhicule automobile propulsé par le moteur (voir les graphes de la figure 7). Dans les deux cas, on utilise le procédé de commande par interpolation illustré aux figures 4 et 5 et appliqué, à titre d'exemple seulement, à un moteur à combustion interne du type "deux temps" alimenté avec un mélange air/carburant assez pauvre en phase de régulation de ralenti.

Il en résulte un fonctionnement instable à bas régime, dû essentiellement à des combustions partielles, ou absentes, du mélange air/carburant présent dans les cylindres du moteur. On dit alors que l'on observe des ratés de combustion. Sur un raté de combustion, phénomène aléatoire, on constate une chute du régime N qui peut engendrer un calage du moteur. Au moment de cette chute de régime (instant $t_1$ des graphes N(t) et $\Delta u(t)$ de la figure 6), le dispositif suivant l'invention augmente fortement le temps d'injection afin de permettre la remontée du régime N. Pour lire les graphes $\Delta u(t)$ des figures 6 et 7 on notera que $\Delta u$ est une correction normalisée, variant entre -1 et +1. A partir du moment où la remontée du régime s'est effectuée (instant $t_2$, figure 6), il faut éviter de trop diminuer le temps d'injection sous peine de favoriser un nouveau raté de combustion. On observe ensuite un léger dépassement du régime de consigne (instant $t_3$, figure 6), dû à des combustions riches en carburant, mais il n'y a pas lieu, dans ce cas, de corriger sensiblement le temps d'injection. Ce type de combustion est dû au surplus de carburant injecté aux instants précédents.

Pour obtenir ce comportement, les points caractéristiques de la fonction représentée à la figure 5 sont dissymétrisés autour du point 0 (ZE) afin de générer une commande $\Delta u_2$ elle aussi dissymétrique. A l'instant $t_1$ (figure 6), la dérivée de l'erreur est vue comme positive moyenne (PM), générant ainsi une correction $\Delta u_2$ positive moyenne (PM). Par contre, à l'instant $t_2$, bien que la dérivée de l'erreur soit de même amplitude en valeur absolue qu'à l'instant $t_1$ celle-ci sera vue comme étant négative petite (NP), générant ainsi une correction $\Delta u_2$ négative petite (NP). Durant tout le raté de combustion, l'erreur reste très petite en valeur absolue de même que la correction $\Delta u_1$ (voir figure 4), l'essentiel de la correction $\Delta u$ de la commande du temps d'injection venant alors du contrôleur 4 de sortie $\Delta u_2$ (voir figure 5).

On se réfère maintenant à la figure 7 du dessin annexé où les graphes N(t) et $\Delta u(t)$ illustrent la correction suivant l'invention d'une chute du régime N due à l'intervention, pendant une phase de ralenti, de l'enclenchement d'un appareil consommateur d'énergie mécanique (dispositif d'assistance de direction par exemple) ou électrique (climatiseur, etc ...).

La perturbation intervient à l'instant $t_1$. On retrouve sensiblement les mêmes conditions initiales d'erreur en régime et de dérivée de cette erreur que lors de l'apparition d'un raté de combustion. La réaction du dispositif suivant l'invention consiste donc à augmenter fortement le temps d'injection de manière qu'une réaction rapide évite le calage du moteur.

A l'instant $t_2$ la remontée progressive du régime du moteur commence mais on maintient alors une forte correction $\Delta u$ du temps d'injection pour que cette remontée puisse se poursuivre. A l'instant $t_3$, le régime a pratiquement rattrapé la valeur de consigne $N_C$ et le dispositif diminue alors la correction du temps d'injection pour éviter un dépassement de cette valeur de consigne.

On observera que, par comparaison à la compensation d'un raté de combustion (voir figure 6), la compensation de la perturbation est plus lente. La correction $\Delta u$ du temps d'injection fait donc intervenir principalement l'erreur E en régime (voir graphe de la figure 4), et donc le contrôleur 3, la dérivée E' restant très faible pendant la remontée du régime.

Les points caractéristiques du graphe de la figure 4 sont ajustés de manière à assurer la correction du temps d'injection dans cette situation. C'est ainsi qu'à l'intervention de la perturbation, l'erreur E se situe autour du point PM, le contrôleur répondant à cette entrée par une correction partielle $\Delta u_1$ de niveau PM. Le point caractéristique PP de l'erreur E est réglé en fonction de l'erreur en régime à l'instant $t_3$ pour que la correction partielle $\Delta u_1$ soit au niveau PP quand le régime N se rapproche du régime de consigne $N_C$.

La présente invention apporte de nombreux avantages. Outre les réductions mentionnées ci-dessus de l'encombrement en mémoire et des temps de calcul, les stratégies de commande développées par le procédé suivant l'invention s'avèrent également très satisfaisantes en matière de robustesse, de tenue aux perturbations, de facilité de réglage et de confort de conduite.

Ces avantages dérivent notamment de la possibilité qu'offre le procédé suivant l'invention de décomposer le fonctionnement du moteur, en régime de ralenti, en quatre situations bien distinctes :

1) entrée en régulation de ralenti, moteur non accouplé (E,E' grands),
2) moteur entraîné par le véhicule (E grand, E' petit),
3) ralenti stabilisé (E,E' petits),
4) intervention d'un raté de combustion ou d'une perturbation (E petit, E' grand), chacune de ces situations pouvant être traitées par des réglages différents des points caractéristiques des graphes des figures 4 et 5 ou des règles de commande "floue" classées dans les tableaux de la figure 3.

Bien entendu l'invention n'est pas limitée au mode de réalisation décrit et représenté qui n'a été donné qu'à titre d'exemple. Elle s'étend en particulier à la commande de tout moteur à combustion interne et non pas seulement à celle d'un moteur deux temps alimenté en mélange "pauvre".

**Revendications**

1. Procédé de commande du régime d'un moteur à combustion interne en phase de ralenti, par correction de la commande d'un actionneur influant sur ce régime en fonction de l'erreur E = $N_C$ - N entre un régime $N_C$ de consigne et le régime actuel N, et de la dérivée temporelle E' de cette erreur, selon lequel on tire une correction ($\Delta u$) de la commande de l'actionneur de la combinaison linéaire de première $\Delta u_1$ et deuxième $\Delta u_2$ corrections partielles fonctions, respectivement, de l'erreur E en régime et de la dérivée temporelle E' de cette erreur, lesdites corrections étant définies en fonction de la position relative de la valeur de l'erreur, respectivement de la dérivée de l'erreur, par rapport à au moins deux valeurs prédéterminées de l'erreur, respectivement dérivée de l'erreur, à chacune desquelles est associée une valeur prédéterminée de la correction partielle $\Delta u_1$, respectivement $\Delta u_2$, l'erreur E et la dérivée E' de cette erreur étant fuzzyfiées et traitées par des jeux séparés de règles de logique floue de manière à fournir, après défuzzyfication, les première $\Delta u_1$ et deuxième $\Delta u_2$ corrections partielles, caractérisé en ce que la dérivée E' de l'erreur est fuzzyfiée à l'aide d'un ensemble de classes d'appartenance qui ne se recouvrent pas dans un intervalle prédéterminé de valeurs de E' établi autour de E' = O, pour filtrer des perturbations liées au bruit sur la mesure de la dérivée au voisinage de sa valeur nulle.

2. Procédé conforme à la revendication 1, caractérisé en ce qu'on sature la correction $\Delta u$ de la commande, pour limiter la dynamique de cette correction.

3. Procédé conforme à la revendication 2, caractérisé en ce qu'on traite la correction $\Delta u$ saturée dans des moyens (7,8) de formation d'une correction directe et d'une correction intégrale dont la somme est ajoutée à une commande nominale de l'actionneur pour constituer le signal de commande U de cet actionneur.

4. Procédé conforme à l'une quelconque des revendications 1 à 3, caractérisé en ce que la correction $\Delta u$ de la commande de l'actionneur est de la forme :

$$\Delta u = G_1 . \Delta u_1 + G_2 . \Delta u_2$$

où $G_1$ et $G_2$ sont des coefficients réglables en fonction de paramètres de fonctionnement du moteur.

5. Dispositif pour la mise en oeuvre du procédé conforme à l'une quelconque des revendications 1 à 4, caractérisé en ce qu'il comprend (a) des moyens (1,2) pour délivrer un premier signal représentatif de l'erreur E en régime et un deuxième signal représentatif de la dérivée temporelle E' de cette erreur, à partir d'un signal délivré par un capteur du régime actuel N du moteur et d'un signal représentatif d'une valeur prédéterminée du régime $N_C$ de consigne de ralenti, b) des premier (3) et deuxième (4) contrôleurs conçus pour traiter les premier et deuxième signaux, respectivement, en logique floue, pour délivrer lesdites première $\Delta u_1$ et deuxième $\Delta u_2$ corrections partielles et c) des moyens (5,6,7,8,9,10) alimentés par ces corrections partielles et par une source (11) d'un signal de commande nominale de l'actionneur pour délivrer un signal de commande final U de l'actionneur.

6. Dispositif conforme à la revendication 5, caractérisé en ce que les moyens délivrant le signal U de commande de l'actionneur comprennent des moyens pour former un signal $\Delta u = G_1 . \Delta u_1 + G_2 . \Delta u_2$ et un

superviseur (14) pour régler les valeurs des coefficients $G_1$ et $G_2$ en fonction de paramètres de fonctionnement du moteur.

7. Dispositif conforme à l'une quelconque des revendications 5 ou 6, caractérisé en ce que le paramètre commandé de l'actionneur est choisi dans le groupe constitué par : l'ouverture d'une vanne de commande d'air additionnel, le temps d'ouverture d'un injecteur de carburant, le phasage des ouvertures d'une pluralité de tels injecteurs, l'angle d'ouverture d'un papillon des gaz à commande électrique.

**Patentansprüche**

1. Verfahren zum Regeln der Drehzahl einer Brennkraftmaschine in der Leerlaufphase durch Korrektur des Stellsignals einer auf diese Drehzahl einwirkenden Betätigungsvorrichtung in Abhängigkeit von dem Fehler $E = N_c - N$ zwischen einer Solldrehzahl $N_c$ und der Istdrehzahl N und von der zeitlichen Ableitung E' dieses Fehlers, bei dem ein Korrekturwert $\Delta u$ für das Stellsignal der Betätigungsvorrichtung durch die lineare Kombination eines ersten $\Delta u_1$ und zweiten $\Delta u_2$ partiellen Korrekturwerts ermittelt wird, die Funktionen des Drehzahlfehlers E bzw. der zeitlichen Ableitung E' dieses Fehlers sind, wobei diese Korrekturwerte definiert werden in Abhängigkeit von der relativen Lage des Wertes des Fehlers bzw. der Ableitung des Fehlers bezüglich mindestens zweier vorgegebener Werte des Fehlers bzw. der Ableitung des Fehlers, von denen jeder einem vorgegebenen partiellen Korrekturwert $\Delta u_1$ bzw. $\Delta u_2$ zugeordnet ist, wobei ferner der Fehler E und die Ableitung E' dieses Fehlers durch getrennte Spielregeln nach der Methode unscharfer Mengen so fuzzyfiziert und aufbereitet werden, daß sie nach der Entfuzzyfizierung die ersten $\Delta u_1$ und zweiten $\Delta u_2$ partiellen Korrekturwerte ergeben, dadurch gekennzeichnet, daß die Ableitung E' des Fehlers mit Hilfe einer Gruppe von Zuordnungsklassen fuzzyfiziert werden, die sich in einem vorgegebenen Intervall von Werten E' um den Punkt E' = 0 herum nicht überdecken, um mit der Messung zusammenhängende Störungen der Ableitung in der Nähe ihres Nullwertes auszufiltern.

2. Verfahren nach Anspruch 1, dadurch gekennzeichnet, daß der Korrekturwert $\Delta u$ des Stellsignals gesättigt wird, um die Dynamik dieser Korrektur zu begrenzen.

3. Verfahren nach Anspruch 1, dadurch gekennzeichnet, daß der gesättigte Korrekturwert $\Delta u$ in Einrichtungen (7, 8) zum Erzeugen eines unmittelbaren Korrekturwertes und eines integrierten Korrekturwertes aufbereitett wird, deren Summe einem nominalen Stellsignal der Betätigungsvorrichtung aufaddiert wird, um das eigentliche Stellsignal U dieser Betätigungsvorrichtung zu bilden.

4. Verfahren nach einem der Ansprüche 1 bis 3, dadurch gekennzeichnet, daß der Korrekturwert $\Delta u$ des Stellsignals der Betätigungsvorrichtung die Form hat:

$$\Delta u = G_1 \cdot \Delta u_1 + G_2 \cdot \Delta u_2$$

worin $G_1$ und $G_2$ Koeffizienten sind, die in Abhängigkeit von Betriebsparametern der Brennkraftmaschine regelbar sind.

5. Vorrichtung zum Durchführen des Verfahrens nach einem der Ansprüche 1 bis 4, dadurch gekennzeichnet, daß sie aufweist: (a) Mittel (1,2) zum Abgeben eines den Drehzahlfehler E darstellenden ersten Signals und eines die zeitliche Ableitung E' dieses Fehlers darstellenden zweiten Signals, ausgehend von einem Signal, das von einem Sensor für die Istdrehzahl der Brennkraftmaschine erzeugt wird, und einem Signal, das einen vorgegebenen Wert der Leerlauf-Solldrehzahl $N_c$ darstellt, (b) ein erstes (3) und ein zweites (4) Rechenglied, die das erste bzw. zweite Signal nach der Methode unscharfer Mengen verarbeitet, um die ersten $\Delta u_1$ und zweiten $\Delta u_2$ partiellen Korrekturwerte zu erzeugen, und (c) Mittel (5,6,7,8, 9,10), denen diese partiellen Korrekturwerte und von einer Quelle (11) ein nominales Stellsignal der Betätigungsvorrichtung zugeführt werden, um das eigentliche Stellsignal U der Betätigungsvorrichtung zu liefern.

6. Vorrichtung nach Anspruch 5, dadurch gekennzeichnet, daß die das Stellsignal U der Betätigungsvorrichtung liefernden Mittel aufweisen: Mittel zum Bilden eines Signals $\Delta u = G_1 \cdot \Delta u_1 + G_2 \cdot \Delta u_2$ und einen Überwacher (14) zum Regeln der Werte der Koeffizienten $G_1$ und $G_2$ in Abhängigkeit von Betriebsparametern der Brennkraftmaschine.

7. Vorrichtung nach Anspruch 5 oder 6, dadurch gekennzeichnet, daß der geregelte Parameter der Betätigungsvorrichtung aus der folgenden Gruppe ausgewählt wird: Öffnen eines Zusatzluft-Steuerventils, Öffnungszeit eines Kraftstoffeinspritzventils, Öffnungsphasen mehrerer derartiger Einspritzventile, Öffnungswinkel einer elektrisch gesteuerten Gas-Drosselklappe.

**Claims**

1. Process for controlling the speed of an internal-combustion engine in the idling phase, by correcting the control of an actuator which influences this speed as a function of the error $E = N_c - N$ between a reference speed $N_c$ and the actual speed N and of the time derivative E' of this error, whereby a correction $\Delta u$ in the control of the actuator is drawn from the linear combination of first $\Delta u_1$ and second $\Delta u_2$ partial corrections which depend on the error E at speed and the time derivative E' of this error respectively, said corrections being defined as a function of the relative position of the value of the error or of the derivative of the error, respectively, with respect to at least two predetermined values of the error or derivative of the error, respectively, each of which is allocated a predetermined value of the partial correction $\Delta u_1$ or $\Delta u_2$ respectively, the error E and the derivative E' of this error being fuzzified and processed by separate sets of rules of fuzzy logic rules so as to provide, after defuzzification, the first $\Delta u_1$ and second $\Delta u_2$ partial corrections, characterised in that the derivative E' of the error is fuzzified by means of a group of membership categones which are not covered in a predetermined range of values of E' established round E' = 0 in order to filter disturbances linked to noise in measurement of the derivative in the vicinity of its zero value.

2.  Process according to claim 1, characterised in that the correction $\Delta u$ of control is saturated to limit the dynamics of this correction.

3.  Process according to claim 2, characterised in that the saturated correction $\Delta u$ is processed in means (7, 8) for forming a direct correction and an integral correction of which the sum is added to a nominal control of the actuator to constitute the signal U for control of this actuator.

4.  Process according to any one of claims 1 to 3, characterised in that the correction $\Delta u$ of control of the actuator is of the form:

$$\Delta u = G_1 . \Delta u_1 + G_2 . \Delta u_2$$

wherein $G_1$ and $G_2$ are coefficients which can be adjusted as a function of operating parameters of the engine.

5.  Device for carrying out the process according to any one of claims 1 to 4, characterised in that it comprises a) means (1, 2) for transmitting a first signal which is representative of the error E at speed and a second signal which is representative of the time derivative E' of this error, based on a signal transmitted by an actual speed sensor N of the engine and a signal representative of a predetermined value of the reference idling speed $N_c$, b) first (3) and second (4) controllers designed to process the first and second signals, respectively, with fuzzy logic, in order to transmit said first $\Delta u_1$ and second $\Delta u_2$ partial corrections and c) means (5, 6, 7, 8, 9, 10) supplied with these partial corrections and with a source (11) of a signal for nominal control of the actuator in order to transmit a signal U for final control of the actuator.

6.  Device according to claim 5, characterised in that the means transmitting the signal U for controlling the actuator comprise means for forming a signal $\Delta u = G_1 . \Delta u_1 + G_2 . \Delta u_2$ and a monitor (14) for adjusting the values of the coefficients $G_1$ and $G_2$ as a function of operating parameters of the engine.

7.  Device according to any one of claims 5 or 6, characterised in that the controlled parameter of the actuator is selected from the group consisting of: the opening of an additional air control valve, the opening time of a fuel injector, the phasing of the openings of a plurality of such injectors, the opening angle of an electrically controlled gas butterfly valve.

EP 0 719 382 B1

FIG.:1

FIG.:2

FIG.:3

FIG.:4

FIG.:5

9

FIG.:6

FIG.:7